# EUROPEAN PATENT APPLICATION

(11) **EP 3 598 413 A1**
(43) Date of publication of application: **22.01.2020**
(21) Application number: 18184352.5
(22) Date of filing: 19.07.2018
(51) Int. Cl.: G08G 1/16, H04W 4/02

(54) **APPARATUS, METHOD, AND COMPUTER PROGRAM FOR A MOBILE TRANSCEIVER**

(71) Applicant: VOLKSWAGEN AKTIENGESELLSCHAFT, 38440 Wolfsburg (DE)
(72) Inventor: Jornod, Guillaume, 10245 Berlin (DE); El Assaad, Ahmad, 38440 Wolfsburg (DE)

(57) **Abstract**

Embodiments relate to an apparatus, a method, and a computer program for a mobile transceiver. The method (10) for a mobile transceiver (200; 210; 220), which is configured to communicate in a mobile communication system (400), comprises obtaining (12) perceptual sensor data, and estimating (14) a radio channel between another transceiver of the mobile communication system (400) and the mobile transceiver (200; 210; 220) based on the perceptual data.

## Description

The present invention relates to an apparatus, a method, and a computer program for a mobile transceiver, more particularly, but not exclusively, to a concept for estimating a radio channel based on perceptional sensor data.

Mobile communication devices are well established and become more and more multifunctional. One area, where mobile communication service becomes more and more established, is in automotive applications. Autonomous driving is on the rise. Though it has been demonstrated that autonomous vehicles can rely on their own sensors, it is foreseen that they can greatly benefit from cooperation, either in terms of control or in terms of perception. This cooperation is supported by communications, V2V (Vehicle-to-Vehicle) or in general V2X (Vehicle-to-Everything). When it comes to cooperative control, in safety time-critical applications, the quality of service of communications systems may become a bottleneck in terms of functional safety. Indeed, the vehicular environment is very challenging for communications systems for its high variability. Vehicular communications systems such as LTE-V (Long Term Evolution Vehicular) or IEEE 802.11 p (Institute of Electrical and Electronics Engineers) attempt to cope with this high unstationarity in their system design.

Document DE 10 2015 104 634 A1 describes a vehicle storing a connectivity map, which defines a quality of communication at different locations. Document DE 10 2016 125 107A1 describes a program, which receives a connectivity map, anticipates a connectivity to a certain system, and informs another application on the anticipated connectivity. Document EP 2 936 893 B1 describes a WiFi database that covers access points in a certain region.

There is a demand for an improved concept for connectivity determination for a mobile transceiver. The independent claims provide an improved concept for connectivity determination for a mobile transceiver.

Embodiments are based on the finding that mobile transceivers comprise more and more sensors, e.g. one or more elements of the group of a camera, a microphone, a temperature sensor, a pressure sensor, a position sensor etc. In particular, vehicles tend to be equipped with many sensors obtaining information on the environment of the vehicle. Embodiments are based on the finding that such perceptual data can be beneficially used to estimate a radio environment.

It is a finding that, for example, V2X applications may have an uncertainty in terms of Quality of Service (QoS) variations. For example, an application that cannot predict QoS cannot adapt its functioning to future conditions and may therefore be limited by the worst case. On the other side, if QoS can be predicted an application may cope with channel quality variations, it may reduce an upper boundary for QoS or adapt the service/application, respectively.

Embodiments may make use of surrounding awareness, which emerges in modern communication systems. It is another finding that sensing and understanding its environment, a communication system may adapt its functioning to external conditions such as dynamic scatterers (e.g. other vehicles) or static scatterers (e.g. buildings). This understanding can also come from cooperation among vehicles, using messaging such as Cooperative Perception Message (CPM) or other cooperative perception protocols. The environment information may then be used along with instantaneous channel estimations to cope with effects such as Doppler spread/shift of the highly dynamic environment in embodiments. Another finding is that a limitation of such a system is that, due to dynamics, cars or vehicles have very limited channel estimation data. Moreover, this data becomes very soon obsolete (becomes outdated very soon). Vehicles could therefore benefit from historical channel information in order to better understand future channel conditions.

Embodiments provide a method for a mobile transceiver configured to communicate in a mobile communication system. The method comprises obtaining perceptual sensor data and estimating a radio channel between another transceiver of the mobile communication system and the mobile transceiver based on the perceptual data. Embodiments may provide enhanced channel estimation and prediction based on using perceptual data.

In embodiments the perceptional sensor data may comprise information on at least one sensed object in the environment of the mobile transceiver. For example, a reflector or scatterer may be sensed and hence its effects on the radio channel can be considered. In further embodiments the perceptional sensor data may further comprise information sensed and communicated by other transceivers of the mobile communication system. Particularly, in case of a high density of mobile transceivers, for example if the mobile transceivers are vehicles in a dense traffic scenario, the commonly sensed perceptual data may be very detailed and may further enhance channel estimation and prediction. Likewise, the method may comprise communicating information on perceptional data generated or sensed at the mobile transceiver from the mobile transceiver to other mobile transceivers. The sharing of perceptual data among mobile transceivers may enable a better detection of any object influencing the radio condition and may hence further enhance channel estimation. For example, the perceptional data comprises information on measurements from different mobile transceivers. In embodiments such measurements may be taken using any sensor, examples of such sensors are cameras, microphones, pressure sensors, radar sensors, lidar (light detection and ranging) sensors, humidity sensors, absolute or relative position sensors, antennas, etc. In embodiments the estimating of the radio channel may comprise identifying objects influencing the radio channel condition based on the information on the measurements from different mobile transceivers. For example, the relative position of vehicles may determine a radio channel between them. A vehicle between two other vehicles may determine the radio channel between the other two vehicles.

In further embodiments the method may further comprise identifying and removing multi-path components from dynamic reflectors from measurement data. Embodiments may distinguish objects with different mobility characteristics having different influences on the dynamics of the radio channel. Some objects may mainly contribute to fast fading (e.g. reflectors generating further multi paths), other objects may rather contribute shadow or slow fading (e.g. objects getting into a line of sight path). In embodiments such objects may be distinguished or characterized accordingly and a more robust or reliable channel estimation or prediction may result. In further embodiments the method may comprise accumulating channel measurements in which identified multi-path components from dynamic reflectors have been removed. At least some embodiments may use the perceptual or measurement data to remove the multi path or fast fading components so to estimate or predict path loss and slow fading components.

Some embodiments may further comprise distinguishing at least two time horizons for estimating the radio channel with respect to perceptional data. For example, short term and long term radio channel characteristics may be distinguished. Distinguishing at least two time horizons for estimating the radio channel with respect to the perceptional data may be applied to further improve the channel estimation in some embodiments. For example, the first time horizon may be based on an estimated coherence time of the radio channel and the second time horizon may be determined by a change of at least one sensed static object in the environment. In further embodiments the method may further comprise communicating information on a description of the environment at a time of a measurement, a position of communication partners and indicators describing the quality of the communication such as latency, throughput, and packet error rate communication. Any of these pieces of information or combinations thereof may be used to further improve a channel estimation quality. In some embodiments the perceptual data may comprise measurements gathered by vehicles and the perceptional data may be aggregated into a channel description model. The channel description model may then enable further channel estimation and prediction. The method may further comprise filtering measurement data, wherein newer measurement data is weighted stronger than older measurement data. Embodiments may reduce the influence of data as it gets outdated. Outdated data may be faded out.

A further embodiment is an apparatus for a mobile transceiver. The apparatus comprises one or more interfaces configured to communicate in a mobile communication system. The apparatus further comprises a control module configured to perform any of the methods described herein. Another embodiment is a vehicle or a mobile transceiver comprising an embodiment of the apparatus. Yet another embodiment is a computer program having a program code for performing at least one of the methods described herein, when the computer program is executed on a computer, a processor, or a programmable hardware component. A further embodiment is a computer readable storage medium or machine readable storage medium storing instructions which, when executed by a computer, processor, or programmable hardware component, cause the computer to implement one of the methods described herein.

Some other features or aspects will be described using the following non-limiting embodiments of apparatuses or methods or computer programs or computer program products by way of example only, and with reference to the accompanying figures, in which:
Fig. 1 illustrates an embodiment of a method for a mobile transceiver;
Fig. 2 shows an embodiment of an apparatus for a mobile transceiver, an embodiment of a mobile transceiver or vehicle, and an embodiment of a mobile communication system;
Fig. 3 illustrates a traffic scenario in an embodiment at a first earlier time instant; and
Fig. 4 shows the traffic scenario of Fig. 3 at a second later time instant.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

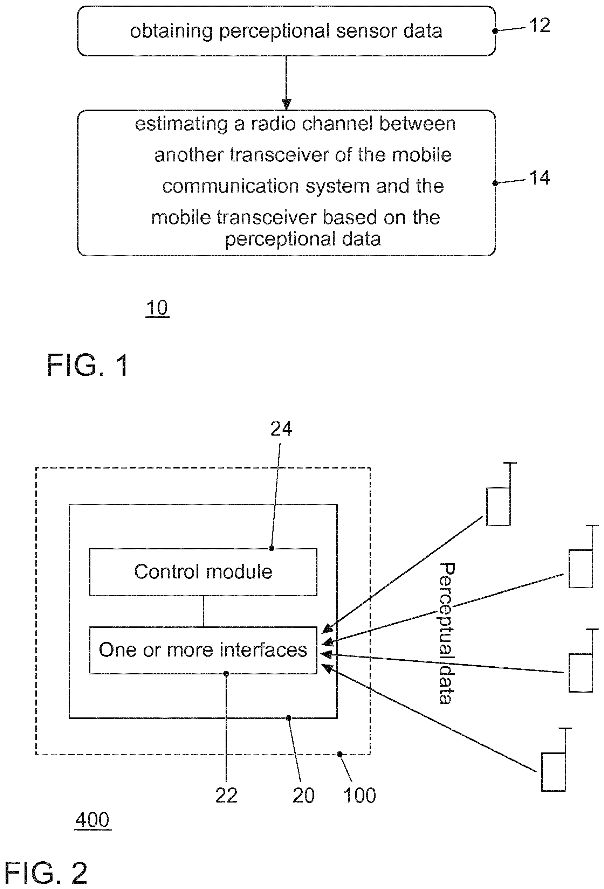

Fig. 1 illustrates an embodiment of a method 10 for a mobile transceiver configured to communicate in a mobile communication system. The method 10 comprises obtaining 12 perceptional sensor data, and estimating 14 a radio channel between another transceiver of the mobile communication system and the mobile transceiver based on the perceptional data. The perceptional data or sensor data can be data or information on data from any perceptual sensor, examples are a camera, a microphone, a pressure sensor, a radar sensor, a lidar sensor, an ultrasonic sensor, a distance sensor, a locations sensor, a position sensor, a humidity sensor, etc. Estimating the radio channel is to be understood in deriving information on an expected radio channel characteristic, which can in general comprise any element of the group of a coherence time, a coherence frequency, a coherence length, a path loss, an attenuation, a delay spread, a Doppler shift, an angular spread, a Rayleigh fading influence, a Rice fading influence, a shadow fading influence, a fast fading influence, a slow fading influence, whether there is a line of side, etc. Moreover, channel estimating 14 may also include channel prediction, hence based on available current and historical data, channel estimating 14 may seek to predict what the radio channel will be like in the future, e.g. in a moment, for the next radio slot or frame, the next second, 10s, a minute, an hour, a day, etc. In embodiments the other mobile transceiver may be another mobile transceiver, a vehicle, a base station, etc. Examples of different constellations will be laid out in detail subsequently.

Fig. 2 shows an embodiment of an apparatus 20 for a mobile transceiver 200. The apparatus 20 comprises one or more interfaces 22 configured to communicate in a mobile communication system 400. The apparatus 20 further comprises a control module 24, which is coupled to the one or more interfaces 22 and which is configured to control the one or more interfaces 22. The control module 24 is further configured to perform one of the methods described herein. Fig. 2 further illustrates an embodiment of a mobile transceiver or vehicle 200 (shown in broken lines), and an embodiment of the mobile communication system 400. In Fig. 2 the scenario suggests that the perceptional data is provided by other mobile transceivers, however, in embodiments the perceptional data may be obtained through any sensors coupled to the one or more interfaces 22. These may be any sensors integrated or coupled to the mobile transceiver 200, i.e. implemented in the same mobile device. In a traffic scenario these may be any sensors coupled to the vehicle communicating with a vehicular modem (which is an implementation of a mobile transceiver 200).

In embodiments the one or more interfaces 22 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 22 may comprise further components to enable according communication in the mobile communication system 400, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 22 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the one or more interfaces 22 may serve the purpose of transmitting or receiving or both, transmitting and receiving, information, such as information related to perceptual data, sensor data, measurement data, capabilities, application requirements, trigger indications, requests, message interface configurations, feedback, information related to control commands etc.

As shown in Fig. 2 the respective one or more interfaces 22 are coupled to the respective control module 24 at the apparatus 20. In embodiments the control module 24 may be implemented using one or more processing units, one or more processing devices, any means for processing, such as a processor, a computer or a programmable hardware component being operable with accordingly adapted software. In other words, the described functions of the control module 24 may as well be implemented in software, which is then executed on one or more programmable hardware components. Such hardware components may comprise a general purpose processor, a Digital Signal Processor (DSP), a micro-controller, etc.

Fig. 2 also shows an embodiment of a system 400 comprising embodiments of the mobile transceiver or vehicle 200 (mobile or relay transceivers). In embodiments, communication, i.e. transmission, reception or both, may take place among mobile transceivers/vehicles 200 directly and/or between mobile transceivers/vehicles 200 and a network component (infrastructure or mobile transceiver) or application server (e.g. a base station, a network server, a backend server, etc.). Such communication may make use of a mobile communication system 400. Such communication may be carried out directly, e.g. by means of Device-to-Device (D2D) communication, which may also comprise Vehicle-to-Vehicle (V2V) or car-to-car communication in case of vehicles 200. Such communication may be carried out using the specifications of a mobile communication system 400.

The mobile communication system 400 may, for example, correspond to one of the Third Generation Partnership Project (3GPP)-standardized mobile communication networks, where the term mobile communication system is used synonymously to mobile communication network. The mobile or wireless communication system 400 may correspond to a mobile communication system of the 5th Generation (5G) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable or configured to communicate with one or more active mobile transceivers/vehicles 200 and a base station transceiver can be located in or adjacent to a coverage area of another base station transceiver, e.g. a macro cell base station transceiver or small cell base station transceiver. Hence, embodiments may provide a mobile communication system 400 comprising two or more mobile transceivers/vehicles 200 and one or more base station transceivers, wherein the base station transceivers may establish macro cells or small cells, as e.g. pico-, metro-, or femto cells. A mobile transceiver 200 may correspond to a smartphone, a cell phone, user equipment, a laptop, a notebook, a personal computer, a Personal Digital Assistant (PDA), a Universal Serial Bus (USB) -stick, a car, a vehicle etc. A mobile transceiver may also be referred to as User Equipment (UE) or mobile in line with the 3GPP terminology. A vehicle may correspond to any conceivable means for transportation, e.g. a car, a bike, a motorbike, a van, a truck, a bus, a ship, a boat, a plane, a train, a tram, etc.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a relay station, a transmission point etc., which may be further subdivided in a remote unit and a central unit.

A mobile transceiver 200 can be associated with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

Mobile transceivers 200 may communicate directly with each other, i.e. without involving any base station transceiver, which is also referred to as Device-to-Device (D2D) communication. An example of D2D is direct communication between vehicles, also referred to as Vehicle-to-Vehicle communication (V2V), car-to-car using 802.11p, respectively. In embodiments the one or more interfaces 22 can be configured to use this kind of communication. In order to do so radio resources are used, e.g. frequency, time, code, and/or spatial resources, which may as well be used for wireless communication with a base station transceiver. The assignment of the radio resources may be controlled by a base station transceiver, i.e. the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc.

For example, direct Cellular Vehicle-to-Anything (C-V2X), where V2X includes at least V2V, V2-Infrastructure (V2I), etc., transmission according to 3GPP Release 14 can be managed by infrastructure (so-called mode 3) or run in a User Equipment (UE) Autonomous mode (UEA), (so-called mode 4). In embodiments the mobile transceiver 200 as indicated by Fig.2 may be registered in the same mobile communication system 400. In other embodiments one or more of the mobile transceivers 200 may be registered in different mobile communication systems 400. The different mobile communication systems 400 may use the same access technology but different operators or they may use different access technologies as outlined above.

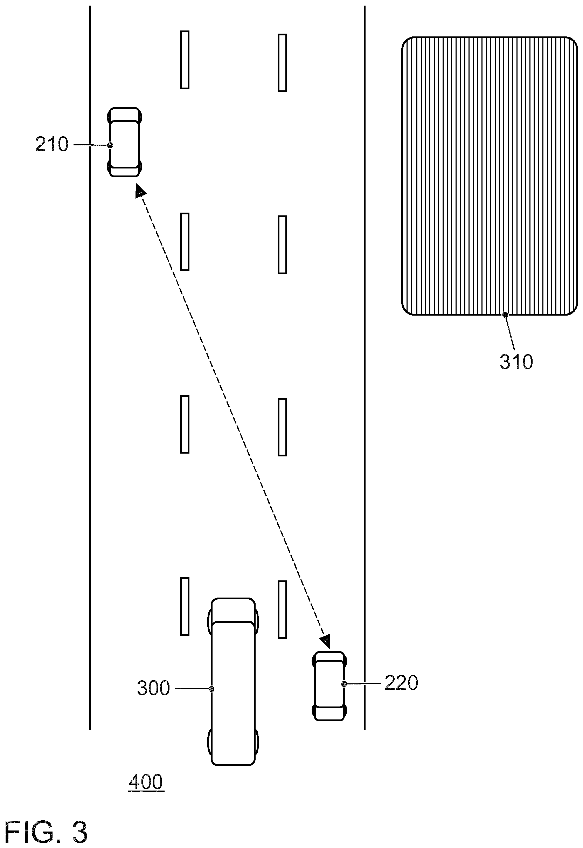

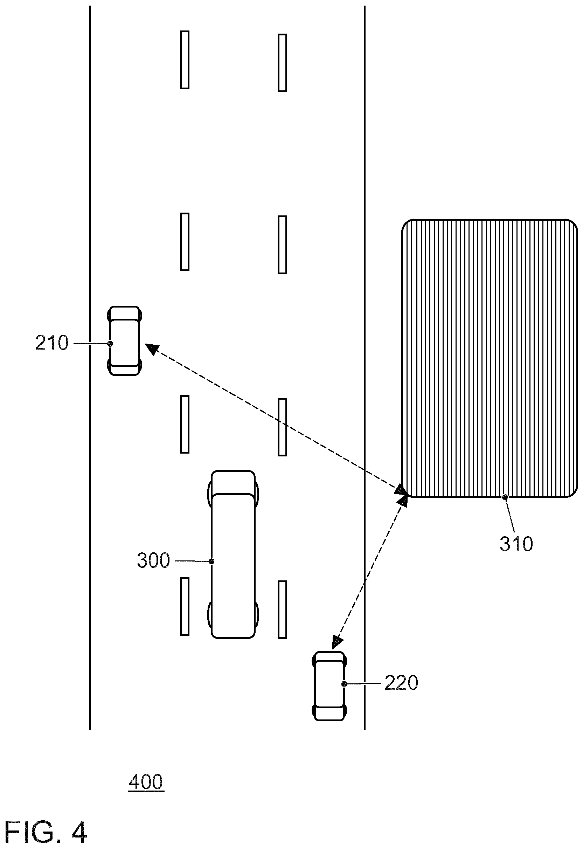

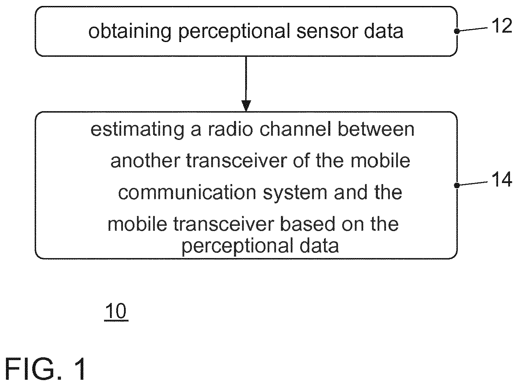

Figs. 3 and 4 illustrate a traffic scenario, where Fig. 3 shows the scenario at a first earlier time instant and Fig. 4 shows the scenario at a second later time instant. Fig. 3 shows two vehicles 210 and 220 as embodiments of the above mobile transceiver 200. The vehicles 210, 220 communicate with each other using a direct radio link of mobile communication system 400, e.g. using 3GPP V2V. In other words, the vehicles 210, 220 run an application that requires said communication. Moreover, it is assumed that the vehicles exchange perceptual data. Vehicle 220 senses an approaching truck 300, which is moving faster than vehicle 220. Vehicle 220 can use this information to predict, that soon the truck 300 will block the line of sight radio path. Hence, the vehicle 220 can predict a quality decrease in the radio channel. Vehicle 210 may sense the truck 300, too. Another option is that vehicle 220 shares information on the upcoming truck 300 or the upcoming blocking of the line of sight with vehicle 210. In general, the perceptional data may comprise information on measurements from different mobile transceivers 200, 210, 220.

The method 10 from the perspective of vehicle 220, then comprises communicating information on perceptional data generated at the mobile transceiver 220 from the mobile transceiver 220 to other mobile transceivers 210. From the perspective of vehicle 210 the perceptual (sensor) data may be provided by vehicle 220. The perceptional sensor data may hence comprise information sensed and communicated by other transceivers 220 of the mobile communication system 400. For example, the perceptional sensor data may comprise information on at least one sensed object in the environment of the mobile transceiver 220, e.g. the truck 300. However, as shown in Fig. 3 there may be another object 310, e.g. a building, a mountain, any reflector or scatterer. If the object 310 is sensed at any vehicle 210, 220 it can be predicted that the object 310 will take influence on the radio channel in the near future as the vehicles 210, 220 pass along the object 310. Fig. 4 illustrates the scenario some time later. The truck 300 now blocks/shadows the line of sight path between the vehicles 210, 220. However, the object 310 offers a reflected path, which can be predicted or estimated at both vehicles. In embodiments the estimating 14 of the radio channel may comprise identifying objects 310 influencing the radio channel condition based on the information on the measurements from different mobile transceivers 210, 220.

The time characteristic of the radio channel may be considered in channel estimation. For example, channel estimation may comprise identifying and removing multi-path components from dynamic reflectors from measurement data. Hence, too dynamic (too fast changing) characteristics may be neglected or averaged out. Channel measurements may be accumulated and identified multi-path components from dynamic reflectors may be removed. Moreover, at least two time horizons for estimating the radio channel with respect to the perceptional data may be distinguished in some embodiments. For example, the first time horizon may be based on an estimated coherence time of the radio channel and the second time horizon may be determined by a change of at least one sensed static object 310 in the environment, e.g. a building as illustrated by Figs. 3 and 4.

The information exchanged between the two vehicles 210, 220 may comprise many components. For example, in some embodiments the method 10 may further comprise communicating information on a description of the environment at a time of a measurement, a position of communication partners and indicators describing the quality of the communication such as latency, throughput, and packet error rate communication. The perceptional data may comprise measurements gathered by vehicles and the perceptional data may be aggregated into a channel description model. A channel description model may be used to base further channel estimation or prediction on. In some embodiments a channel description model may be further developed based on the perceptual data and channel estimation for ongoing communication may be based on said channel model. For example, the channel model may be based on an updating mechanism, which is similar to a forgetting filter (the older the information input into the model the less influence it has). For example, in another embodiment the method 10 may comprise filtering measurement data, wherein newer measurement data is weighted stronger than older measurement data.

Embodiments may hence achieve or develop an understanding of the channel conditions/models. Embodiments may generate a cooperative system to improve communications. Vehicles 200, 210, 200 may share their channel estimates as well as relevant information regarding their position and their environment (positions of other communication partners, dynamic scatterers etc.). In some embodiments they may share a link to a CPM (Central/Control Processing Module) for instance. Since the channel information becomes rapidly outdated, there might not be a need to accumulate the received data for too long, neither in the message or in the vehicles. Receiving such a message, vehicles 210, 220 can create a mid-term database of channel estimates along with environment information, and predict channel conditions in a reasonable prediction horizon. They can then adapt their communication systems, and, if the required quality of service is impossible to meet, they can adapt their applications, e.g. move to another access technology.

Embodiments may enable to fuse information from perception sensors and channel measurements obtained by other vehicles or mobile transceivers 200, 210, 220 in a surrounding environment: these other vehicles other mobile transceivers 200, 210, 220 may serve as channel sensor. Embodiments may further provide environment aware communication methods and define usable objects.

In the vehicular environment, two categories of objects may be distinguished in embodiments in addition to the above time horizons:
- Objects that can be clearly sensed, characterized and tracked, such as cars, pedestrians, large animals, road signs, buildings. The characteristics that can be determined through vehicles sensors are their position, velocity, acceleration, shape, dimensions, motion model etc.
- Objects that are difficult to characterize, especially their shape and dimensions such as trees, fences, medium size animals (birds, rabbit, dogs etc.)

To be used in environment-aware communication methods such as Doppler compensation, objects may need a clear shape characterization, thus objects of the second category might not be used in some embodiments. However, they have contributions to the multi-path components affecting the communication channel and there is a benefit in being able to identify these effects.

Using multiple measurements to characterize undefined object contributions may make use of accumulating channel measurements in which identified multi-path components from dynamic reflectors have been a priori removed, leaving the unidentified components coming from the second aforementioned group.

These measurements may then be used in addition to the limited information gathered about the second category of objects to identify their contributions in different communication instances from different transmit (Tx) and receive (Rx) positions, directions and velocities. As laid out above, the two transceivers, between which the radio channel is evaluated, may, for example, correspond to any pair of a mobile transceiver, a vehicle, a relay transceiver, user equipment, and a base station transceiver.

As described above, at least some embodiments may consider two time horizons for data accumulation. The first time horizon may be the channel coherence time, in which the channel remains stationary. The second time horizon may be of longer term, such as minutes, hours, days, etc. The first time horizon may be defined to consider the dynamics of the environment and may span from ms to tens of seconds. The later limits the consideration of moved parts of undetermined objects such as fallen branches.

Within the first horizon, channel estimates may be used with a larger confidence, as the channel can be considered stationary. There may however be a need to operate some geometrical transformation in order to account for the different poses of the Tx/Rx pair that operated the measurements.

Within the second horizon, a mapping method that removes the instantaneous effects and only keeps the path loss, fading and shadowing effects from fixed, difficult to characterize objects is used in some embodiments to process the obtained measurements. There, only contributions affecting the channel in a long term may be considered.

In embodiments, the channel estimates may be communicated through wireless technology such as a mobile communication system 400, along with a description of the environment at the time of the communication. Further information that may be communicated may comprise the position of the communication partners and indicators describing the quality of the communication such as latency, throughput, and packet error rate communication within a dedicated signaling. Such information may be referred to as CCM (Cooperative Communication Message). These measurements may be gathered by vehicles/mobile transceivers and they may be aggregated in a channel description model, following the example of methods such as a Kalman filter or an adaptive filter, where new measurements get a higher confidence and therefore weight in the output model. Therefore, previous measurements might not be actively removed but they may have a lesser contribution in the aggregated model. It can also be envisioned that where a Road Side Unit (RSU) is already present, these measurements may be stored in this RSU and communicated to arriving potential communication partners via CCM. These arriving vehicles would therefore benefit from information about the channel conditions before they even perform their own channel estimation in some embodiments.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a (non-transitory) computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

### List of reference signs

- 10: method for a mobile transceiver
- 12: obtaining perceptional sensor data
- 14: estimating a radio channel between another transceiver of the mobile communication system and the mobile transceiver based on the perceptional data
- 20: apparatus for a mobile transceiver
- 22: one or more interfaces
- 24: control module
- 200: mobile transceiver/vehicle
- 210: mobile transceiver/vehicle
- 220: mobile transceiver/vehicle
- 300: truck
- 310: object
- 400: mobile communication system

## Claims

1. A method (10) for a mobile transceiver (200; 210; 220) configured to communicate in a mobile communication system (400), the method (10) comprising
obtaining (12) perceptual sensor data; and
estimating (14) a radio channel between another transceiver of the mobile communication system (400) and the mobile transceiver (200; 210; 220) based on the perceptual data.

2. The method (10) of claim 1, wherein the perceptual sensor data comprises information on at least one sensed object (300; 310) in the environment of the mobile transceiver (200; 210; 220).

3. The method (10) of one of the claims 1 or 2, wherein the perceptual sensor data comprises information sensed and communicated by other transceivers of the mobile communication system (400).

4. The method (10) of one of the claims 1 to 3, further comprising communicating information on perceptual data generated at the mobile transceiver (200; 210; 220) from the mobile transceiver (200; 210; 220) to other mobile transceivers.

5. The method (10) of one of the claims 1 to 4, wherein the perceptual data comprises information on measurements from different mobile transceivers.

6. The method (10) of claim 5, wherein the estimating of the radio channel comprises identifying objects influencing the radio channel condition based on the information on the measurements from different mobile transceivers.

7. The method (10) of claim 6, further comprising identifying and removing multi-path components from dynamic reflectors from measurement data.

8. The method (10) of claim 7, further comprising accumulating channel measurements in which identified multi-path components from dynamic reflectors have been removed.

9. The method (10) of one of the claims 1 to 8, further comprising distinguishing at least two time horizons for estimating the radio channel with respect to the perceptual data.

10. The method (10) of one of the claims 1 to 8, further comprising distinguishing at least two time horizons for estimating the radio channel with respect to the perceptual data, wherein the first time horizon is based on an estimated coherence time of the radio channel and wherein the second time horizon is determined by a change of at least one sensed static object in the environment.

11. The method (10) of one of the claims 1 to 10, further comprising communicating information on a description of the environment at a time of a measurement, a position of communication partners and indicators describing the quality of the communication such as latency, throughput, and packet error rate communication.

12. The method (10) of one of the claims 1 to 11, wherein the perceptual data comprises measurements gathered by vehicles and wherein the perceptual data is aggregated into a channel description model.

13. The method (10) of claim 12 comprising filtering measurement data, wherein newer measurement data is weighted stronger than older measurement data.

14. A computer program having a program code for performing at least one of the methods (10) of claims 1 to 13, when the computer program is executed on a computer, a processor, or a programmable hardware component.

15. An apparatus (20) for a mobile transceiver (200; 210; 220), the apparatus (20) comprising
one or more interfaces (22) configured to communicate in a mobile communication system (400); and
a control module (24) configured to perform one of the methods (10) of claims 1 to 13.
